# EUROPEAN PATENT SPECIFICATION

(11) **EP 4 029 170 B1**
(45) Date of publication and mention of the grant of the patent: **08.01.2025**
(21) Application number: 20828868.8
(22) Date of filing: 19.10.2020
(51) Int. Cl.: H04J 11/00, H04W 72/12

(54) **USER EQUIPMENT COORDINATION FOR CO-CHANNEL INTERFERENCE MITIGATION**
KOORDINATION VON BENUTZERGERÄTEN FÜR KO-KANALINTERFERENZUNTERDRÜCKUNG
COORDINATION D'ÉQUIPEMENT D'UTILISATEUR POUR ATTÉNUATION DE BROUILLAGE DANS UN MÊME CANAL

(30) Priority: 20.11.2019 US 201962938156 P
(43) Date of publication of application: 20.07.2022
(73) Proprietor: Google LLC, Mountain View, CA 94043 (US)
(72) Inventor: WANG, Jibing, Mountain View, California 94043 (US); STAUFFER, Erik Richard, Mountain View, California 94043 (US)
(74) Representative: Marks & Clerk GST
(86) International application number: PCT/US2020/056278
(87) International publication number: WO 2021/101645

(56) References cited:
- WO-A2-2004/073180
- US-A1- 2014 273 862
- US-A1- 2015 257 160
- US-A1- 2017 332 355

## Description

### BACKGROUND

Generally, a provider of a wireless network manages wireless communications over the wireless network. For example, a base station manages a wireless connection with user equipment (UE) that is connected to the wireless network. The base station typically determines configurations for the wireless connection, such as bandwidth and timing for the wireless connection.

The link quality between the UE and the base station can be degraded due to several factors, such as loss in signal strength, interfering signals, and so forth. For example, a downlink or uplink of a UE can cause co-channel interference in another communication link of another UE. Several solutions have been developed to improve link quality.

Document US2014273862 discloses a system and a method for Interference Cancellation Using Terminal Cooperation. According to US2014273862, soft information for achieving interference cancellation in downlink transmissions can be communicated over device-to-device (D2D) links, thereby allowing paired user equipments (UEs) to receive downlink transmissions over the same radio resources. Paired UEs that receive transmissions over the same time-frequency resources may exchange soft or hard information over D2D links in order to facilitate interference cancellation. Paired UEs may be in the same or different cells, and may receive their respective transmissions from the same or different transmit point. UEs may be paired with one another based on various criteria, e.g., interference cancellation capabilities, scheduling metrics, etc

However, with recent advancements in wireless communication systems, such as Fifth Generation New Radio (5G NR), new approaches may be available.

### SUMMARY

This document describes techniques and apparatuses of user equipment coordination for co-channel interference mitigation. In some aspects, the techniques enable base stations to form user equipment-coordination sets (UE-coordination sets) in which user equipment of the UE-coordination set can share or exchange signal-related information to enable interference cancelation. The apparatuses and techniques described in this document overcome challenges that a UE may encounter when a downlink transmission to another UE interferes with a reception by the UE of signals transmitted to the UE by a base station. For example, such interference may prevent the UE from being able to receive a downlink from the base station or impair demodulation and decoding of the downlink by the UE.

The invention is defined by the independent claims. Preferred embodiments of the invention are defined in the dependent claims.

The details of one or more implementations of user equipment coordination for co-channel interference mitigation are set forth in the accompanying drawings and the following description. Other features and advantages will be apparent from the description and drawings, and from the claims.

### BRIEF DESCRIPTION OF THE DRAWINGS

The details of one or more aspects of user equipment coordination for co-channel interference mitigation are described below. The use of the same reference numbers in different instances in the description and the figures indicate similar elements:
FIG. 1 illustrates an example operating environment in which various aspects of user equipment coordination for co-channel interference mitigation can be implemented.
FIG. 2 illustrates an example device diagram of network entities that can implement various aspects of user equipment coordination for co-channel interference mitigation.
FIG. 3 illustrates an example an air interface resource that extends between a user equipment and a base station and with which various aspects of user equipment coordination for co-channel interference mitigation can be implemented.
FIG. 4 illustrates an example environment in which a user equipment-coordination set is implemented in accordance with one or more aspects.
FIG. 5 illustrates an example transaction diagram of base stations and user equipments of a coordination set implementing interference cancelation.
FIG. 6 illustrates an example method for canceling interference from a received downlink transmission.
FIG. 7 illustrates an example method for forming a user equipment-coordination set.

### DETAILED DESCRIPTION

In conventional wireless communication systems, a radio frequency (RF) signal quality (link quality) between a user equipment (UE) and a base station (BS) can degrade due to several factors, including signal interference, UE movement relative to the base station, or obstructions between the UE and the base station. This signal quality degradation may result in slower and less efficient data transmissions.

A type of interference, which may be referred to as "co-channel interference," can occur when a first UE uses a set of air interface resources for a downlink with a first base station at the same time a second UE uses at least a subset or portion of those same air interface resources for a downlink with a second base station. Co-channel interference (CCI) can be particularly strong for UEs of neighboring or adjacent base stations (or network cells), such as when UEs of different base stations that are proximate to each other and are near coverage boundaries of their respective base stations.

This document describes aspects of user equipment coordination for co-channel interference mitigation, which may be implemented to form a user equipment-coordination set (UE-coordination set, UECS) between multiple UEs. Generally, the user equipment-coordination set includes at least two UEs that communicate through a local wireless network connection, such as to perform joint transmission, joint reception and/or share other signal-related or schedule-related information. For example, the aforementioned first UE and second UE can be grouped into a UECS and employ joint reception to mitigate the effects of co-channel interference when the first UE and the second UE are concurrently receiving downlink communications from their respective serving base stations.

Joint communication by the UE-coordination set enhances a target UE's ability to transmit data to a base station and receive data from the base station by generally acting as a distributed antenna of the target UE. For example, the base station transmits downlink data using radio frequency (RF) signals to multiple UEs in the UE-coordination set. At least some of the multiple UEs demodulate the received RF signals to an analog baseband signal and sample the baseband signal to produce a set of I/Q samples, which the UEs send to a coordinating UE along with system timing information. The coordinating UE accumulates and stores the I/Q samples from each UE in a memory buffer. Because each of the UEs in the UE-coordination set synchronizes with the base station, all of the UEs in the UE-coordination set have a common time, based on a common time base (*e*.*g*., system frame number (SFN)), effective to enable the coordinating UE to manage the timing and aligning of the I/Q samples for the accumulation and storage of the I/Q samples in the memory buffer. For joint reception and decoding, the coordinating UE processes the stored I/Q samples to decode the downlink data for the target UE (which may be the coordinating UE or any other UE in the UECS). In aspects, I/Q samples can be processed at multiple UEs (*e*.*g*., less than all the UEs in the UE-coordination set), at the target UE or at the coordinating UE. At least a subset of the UEs in the UE-coordination set can participate in the accumulation and/or the joint processing of the downlink I/Q samples. In at least one aspect, the coordinating UE can select which UEs in the UE-coordination set are to be included in the subset of UEs that participate in the accumulation and/or the joint processing of the downlink I/Q samples. In other aspects, the base station can make this selection. For joint transmission, multiple UEs in the UE-coordination set each use their respective antennas and transmitters to transmit uplink data from the target UE on air interface resources as directed by the base station coordinating the UE-coordination set. In this way, the target UE's uplink data can be processed together and transmitted using the transmitters and the transmission antennas of multiple (including all) UEs in the UE-coordination set. In an example, the target UE uses its local wireless network transceiver to transmit uplink data to the coordinating UE. The coordinating UE uses its local wireless network transceiver to distribute the data to the other UEs in the UE-coordination set. Then, all the UEs in the UE-coordination set process and transmit the uplink data to the base station. In this way, the joint transmission provides for a better effective link budget for transmission of the uplink data for the target UE.

In aspects of user equipment coordination for co-channel interference mitigation, the first UE of the UE-coordination set can receive, from the second UE of the UE-coordination set and through a local wireless network connection, I/Q samples (*e*.*g*., in-phase and quadrature amplitude modulation (I/Q) samples) of downlink signals received by the second UE from the second base station during a same time interval during which the first UE received downlink signals from the first base station. The information provided by the second UE may include signal-related information describing signals of the second downlink transmission (*e*.*g*., in-phase and quadrature amplitude modulation (I/Q) samples) or scheduling information describing how or when the second downlink transmission occurs (*e.g.*, time, frequency, and/or modulation coding scheme (MCS) information). Based on the received I/Q samples, the first UE can model interference from the second downlink transmission of the second base station to a reception of a first downlink transmission from the first base station by the first UE. After the first UE receives the first downlink transmission, the first UE cancels, based on the modeling of the interference, the interference to the first downlink transmission from the second downlink transmission of the second base station. By so doing, the first UE can reduce or cancel the co-channel interference caused by the second downlink transmission from the second base station to the received first downlink signals intended for the first UE, thereby improving receive performance or communication link quality of the first UE. Likewise, joint reception, interference modeling, and interference cancelation can be used to mitigate interference to the second downlink to the second UE from the first downlink transmissions by the first base station to the first UE.

### Example Environments

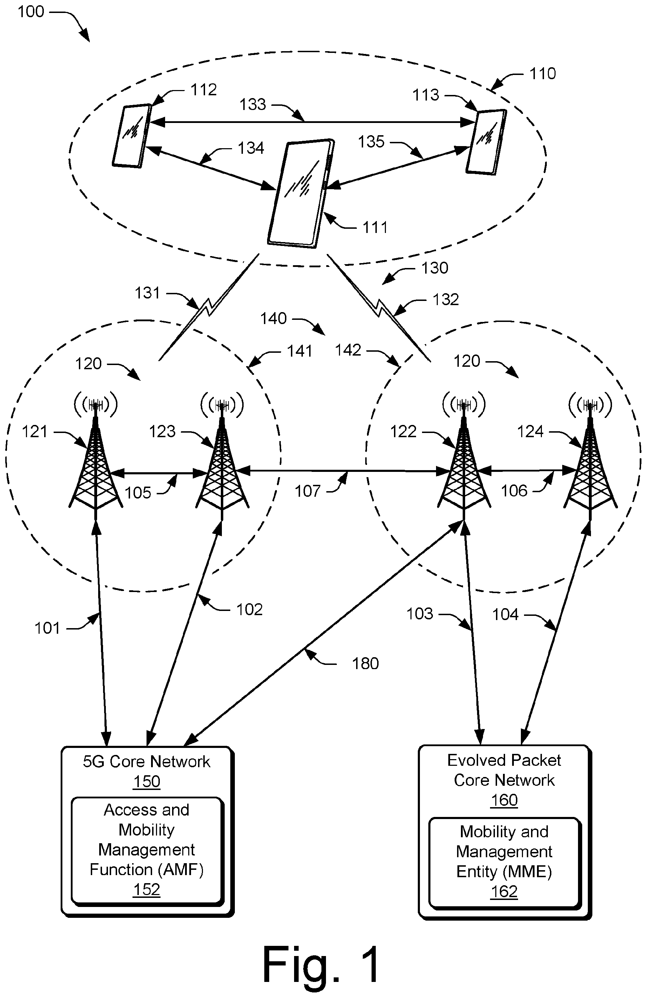

FIG. 1 illustrates an example operating environment 100 in which various aspects of user equipment coordination for co-channel interference mitigation can be implemented. Generally, the example environment 100 includes multiple user equipment 110 (UE 110), illustrated as UE 111, UE 112, and UE 113 of a UE-coordination set. Each UE 110 can communicate with base stations 120 (illustrated as base stations 121, 122, 123, and 124) through wireless communication links 130 (wireless link 130), illustrated as wireless links 131 and 132. Each UE 110 in a UE-coordination set can communicate with other UE 110 in the UE-coordination set through one or more local wireless network connections which are illustrated in this example as local wireless network connections 133, 134, and 135. The local wireless network connections can be implemented as any suitable type of wireless connection or link, such as a millimeter wave (mmWave) link, sub-millimeter wave (sub-mmWave) link, free space optical (FSO) link, wireless local access network (WLAN), wireless personal area network (WPAN), near-field communication (NFC), Bluetooth^{™}, ZigBee^{™}, radar, lidar, sonar, ultrasonic, or the like.

In some aspects, the base stations 120 provide configuration information to the UEs 110 to establish or manage the local wireless network connections. Alternately or additionally, the local wireless network connections 133, 134, or 135 can be configured to use an unlicensed frequency band. In such cases, the UEs 110 may coordinate to establish the local wireless network connections. In some aspects, the UEs 110 communicate over the local wireless network connections 133, 134, or 135 to share signal-related information or scheduling information associated with an uplink communication of one of the UEs 110. For simplicity, the UE 110 is implemented as a smartphone but may be implemented as any suitable computing or electronic device, such as a smart watch, mobile communication device, modem, cellular phone, gaming device, navigation device, media device, laptop computer, desktop computer, tablet computer, smart appliance, vehicle-based communication system, an Internet-of things (IoT) device (*e*.*g*., sensor node, controller/actuator node, combination thereof), and the like. The base stations 120 (*e.g.*, an Evolved Universal Terrestrial Radio Access Network Node B, E-UTRAN Node B, evolved Node B, eNodeB, eNB, Next Generation Node B, gNode B, gNB, or the like) may be implemented in a macrocell, microcell, small cell, picocell, or the like, or any combination thereof.

The base stations 120 communicate with the UE 110 through the wireless links 131 and 132, which may be implemented as any suitable type of wireless link. The wireless links 131 and 132 include control and data communication, such as downlink of data and control information communicated from the base stations 120 to the UE 110, uplink of other data and control information communicated from the UE 110 to the base stations 120, or both. The wireless links 130 may include one or more wireless links (*e*.*g*., radio links) or bearers implemented using any suitable communication protocol or standard, or combination of communication protocols or standards, such as 3rd Generation Partnership Project Long-Term Evolution (3GPP LTE), Fifth Generation New Radio (5GNR), and so forth. Multiple wireless links 130 may be aggregated in a carrier aggregation to provide a higher data rate for the UE 110. Multiple wireless links 130 from multiple base stations 120 may be configured for Coordinated Multipoint (CoMP) communication with the UE 110. Additionally, multiple wireless links 130 may be configured for single-RAT dual connectivity or multi-RAT dual connectivity (MR-DC). Each of these various multiple-link situations tends to increase the power consumption of the UE 110.

The base stations 120 collectively form a Radio Access Network 140 (*e.g.*, RAN, Evolved Universal Terrestrial Radio Access Network, E-UTRAN, 5G NR RAN or NR RAN). The RANs 140 are illustrated as an NR RAN 141 and an E-UTRAN 142. The base stations 121 and 123 in the NR RAN 141 are connected to a Fifth Generation Core 150 (5GC 150) network. The base stations 122 and 124 in the E-UTRAN 142 connect to an Evolved Packet Core 160 (EPC 160). Alternately or additionally, the base station 122 may connect to both the 5GC 150 and EPC 160 networks.

The base stations 121 and 123 connect, at 101 and 102 respectively, to the 5GC 150 through an NG2 interface for control-plane signaling and using an NG3 interface for user-plane data communications. The base stations 122 and 124 connect, at 103 and 104 respectively, to the EPC 160 using an S 1 interface for control-plane signaling and user-plane data communications. Optionally or additionally, if the base station 122 connects to the 5GC 150 and EPC 160 networks, the base station 122 connects to the 5GC 150 using an NG2 interface for control-plane signaling and through an NG3 interface for user-plane data communications, at 180.

In addition to connections to core networks, the base stations 120 may communicate with each other. For example, the base stations 121 and 123 communicate through an Xn interface at 105 and the base stations 122 and 124 communicate through an X2 interface at 106 to exchange user-plane and control-plane data. The interface or link at 105 or 106 between the base stations 120 can be implemented as any suitable type of link, such as a mmWave link, a sub-mmWave link, or an FSO link. At least one base station 120 (base station 121 and/or base station 123) in the NR RAN 141 can communicate with at least one base station 120 (base station 122 and/or base station 124) in the E-UTRAN 142 using an Xn interface 107. In aspects, base stations 120 in different RANs (*e*.*g*., master base stations 120 of each RAN) communicate with one another using an Xn interface such as Xn interface 107.

The 5GC 150 includes an Access and Mobility Management Function 152 (AMF 152), which provides control-plane functions, such as registration and authentication of multiple UE 110, authorization, and mobility management in the 5G NR network. The EPC 160 includes a Mobility Management Entity 162 (MME 162), which provides control-plane functions, such as registration and authentication of multiple UE 110, authorization, or mobility management in the E-UTRA network. The AMF 152 and the MME 162 communicate with the base stations 120 in the RANs 140 and also communicate with multiple UE 110, using the base stations 120.

### Example Devices

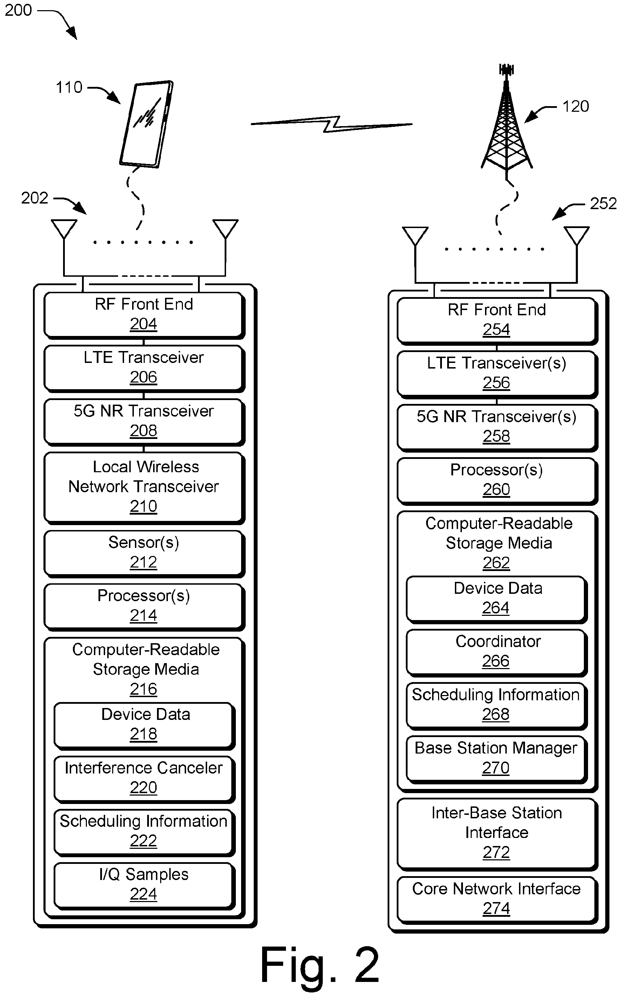

FIG. 2 illustrates an example device diagram 200 of a user equipment and a service cell base station. Generally, the device diagram 200 describes network entities that can implement various aspects of UE coordination for interference cancelation. FIG. 2 shows respective instances of the multiple UEs 110 and the base stations 120. The multiple UEs 110 and the base stations 120 may include additional functions and interfaces that are omitted from FIG. 2 for the sake visual brevity. The UE 110 includes antennas 202, a radio frequency front end 204 (RF front end 204), and radio-frequency transceivers (*e*.*g*., an LTE transceiver 206 and a 5G NR transceiver 208) for communicating with base stations 120 in the 5G RAN 141 and/or the E-UTRAN 142. The UE 110 includes one or more additional transceivers (*e*.*g*., local wireless network transceiver 210) for communicating over one or more local wireless networks (*e*.*g*., WLAN, WPAN, Bluetooth^{™}, NFC, Wi-Fi-Direct, IEEE 802.15.4, ZigBee, Thread, mmWave, sub-mmWave, FSO, radar, lidar, sonar, ultrasonic) with at least one other UE of the UE-coordination set. The RF front end 204 of the UE 110 can couple or connect the LTE transceiver 206, the 5G NR transceiver 208, and the local wireless network transceiver 210 to the antennas 202 to facilitate various types of wireless communication.

The antennas 202 of the UE 110 may include an array of multiple antennas that are configured similar to or differently from each other. The antennas 202 and the RF front end 204 can be tuned to, and/or be tunable to, one or more frequency bands defined by the 3GPP LTE and 5G NR communication standards and implemented by the LTE transceiver 206, and/or the 5G NR transceiver 208. Additionally, the antennas 202, the RF front end 204, the LTE transceiver 206, and/or the 5G NR transceiver 208 may be configured to support beamforming for the transmission and reception of communications with the base stations 120. By way of example and not limitation, the antennas 202 and the RF front end 204 can be implemented for operation in sub-gigahertz bands, sub-6 GHz bands, and/or above 6 GHz bands that are defined by the 3GPP LTE and 5G NR communication standards (*e*.*g*., 57-64 GHz, 28 GHz, 38 GHz, 71 GHz, 81 GHz, or 92 GHz bands). In addition, the RF front end 204 can be tuned to, and/or be tunable to, one or more frequency bands defined and implemented by the local wireless network transceiver 210 to support transmission and reception of communications with other UEs in the UE-coordination set over a local wireless network.

The UE 110 includes sensor(s) 212 can be implemented to detect various properties such as temperature, supplied power, power usage, battery state, or the like. As such, the sensors 212 may include any one or a combination of temperature sensors, thermistors, battery sensors, and power usage sensors.

The UE 110 also includes processor(s) 214 and computer-readable storage media 216 (CRM 216). The processor 214 may be a single core processor or a multiple core processor implemented with a homogenous or heterogenous core structure. The computer-readable storage media described herein excludes propagating signals. CRM 216 may include any suitable memory or storage device such as random-access memory (RAM), static RAM (SRAM), dynamic RAM (DRAM), non-volatile RAM (NVRAM), read-only memory (ROM), or Flash memory useable to store device data 218 of the UE 110. The device data 218 includes user data, multimedia data, beamforming codebooks, applications, and/or an operating system of the UE 110, which are executable by processor(s) 214 to enable user-plane communication, control-plane signaling, and user interaction with the UE 110.

In aspects of user equipment coordination, the CRM 216 of the UE 110 may also include an interference canceler 220 (an interference canceler application 220), scheduling information 222, and I/Q samples 224. Alternately or additionally, the interference canceler 220 may be implemented in whole or part as hardware logic or circuitry integrated with or separate from other components of the UE 110. Generally, the interference canceler 220 of the UE 110 can cancel or reduce interference to a first downlink transmission to the UE caused by or associated with a second downlink transmission to another UE 110. To do so, the interference canceler 220 according to the claimed invention receives scheduling information 222 and signal-related information, such as I/Q samples 224, for the second downlink transmission to the other UE. The I/Q (in-phase and quadrature amplitude modulation) samples 224 or data can be indicative of signal characteristics (amplitude, phase, etc.) of at least part of a transmission. Scheduling information or data indicates, according to the claimed invention, MIMO (Multiple Input Multiple Output) modes and modulation modes at different points in time. The scheduling data may indicate precise timing of transmissions, including transmissions that have occurred in the past, as well as future transmissions that have yet to occur.

Based on the signal-related information, the interference canceler 220 can model, reconstruct, or estimate interference from the other downlink transmission to reception of the first downlink transmission to the UE 110 by a first base station. The interference canceler 220 can use the modeling of the interference to cancel the co-channel interference to the received first downlink transmission from the second downlink transmission.

The interference canceler 220 can reduce or cancel interference in a variety of ways or procedures. In some aspects, modeled interference or reconstructed interference is subtracted from signals of the downlink at an I/Q level. Alternately or additionally, the interference canceler 220 can generate a filter based on the I/Q samples 224 and apply the generated filter to the signals of the downlink to cancel the interference. By so doing, the interference canceler 220 can reduce co-channel interference caused by the second downlink transmission to the other UE 110 and improve receive performance of the UE 110. To communicate with another UE 110, the interference canceler 220 may also establish or configure a local wireless network connection with the other UE 110 to communicate or share the signal-related information. The implementations and uses of the interference canceler 220 vary and are described throughout the disclosure.

Aspects and functionalities of the UE 110 may be managed by operating system controls presented through an application programming interface (API). In some aspects, the interference canceler 220 accesses an API or an API service of the UE 110 to control aspects and functionalities of the user equipment or transceivers thereof. For example, the interference canceler 220 can access or utilize the LTE transceiver 214 or 5G NR transceiver 216 to model interference based on the I/Q samples 224, generate filters using the I/Q samples, or to subtract the modeled interference from received signals at the I/Q level. CRM 216 also includes a communication manager (not shown). The communication manager may also be implemented in whole or part as hardware logic or circuitry integrated with or separate from other components of the UE 110. In at least some aspects, the communication manager configures the RF front end 204, the LTE transceiver 206, the 5G NR transceiver 208, and/or the local wireless network transceiver 210 to implement the techniques of user equipment coordination for co-channel interference mitigation as described herein.

The device diagram for the base stations 120, shown in FIG. 2, includes a single network node (*e*.*g*., a gNode B). The functionality of the base stations 120 may be distributed across multiple network nodes or devices and may be distributed in any fashion suitable to perform the functions described herein. The base stations 120 include antennas 252, a radio frequency front end 254 (RF front end 254), one or more LTE transceivers 256, and/or one or more 5G NR transceivers 258 for communicating with the UE 110. The RF front end 254 of the base stations 120 can couple or connect the LTE transceivers 256 and the 5G NR transceivers 258 to the antennas 252 to facilitate various types of wireless communication. The antennas 252 of the base stations 120 may include an array of multiple antennas that are configured similar to or differently from each other. The antennas 252 and the RF front end 254 can be tuned to, and/or be tunable to, one or more frequency band defined by the 3GPP LTE and 5G NR communication standards, and implemented by the LTE transceivers 256, and/or the 5G NR transceivers 258. Additionally, the antennas 252, the RF front end 254, the LTE transceivers 256, and/or the 5G NR transceivers 258 may be configured to support beamforming, such as Massive-MIMO, for the transmission and reception of communications with any UE 110 in a UE-coordination set.

The base stations 120 also include processor(s) 260 and computer-readable storage media 262 (CRM 262). The processor 260 may be a single core processor or a multiple core processor composed of a variety of materials, such as silicon, polysilicon, high-K dielectric, copper, and so on. CRM 262 may include any suitable memory or storage device such as random-access memory (RAM), static RAM (SRAM), dynamic RAM (DRAM), non-volatile RAM (NVRAM), read-only memory (ROM), or Flash memory useable to store device data 264 of the base stations 120. The device data 264 includes network scheduling data, radio resource management data, beamforming codebooks, applications, and/or an operating system of the base stations 120, which are executable by processor(s) 260 to enable communication with the UE 110.

In aspects, the CRM 312 of the base station 120 also includes a user equipment set coordinator 266 (coordinator 266, user equipment set coordinator application 266) and scheduling information 268. Alternately or additionally, the coordinator 266 may be implemented in whole or part as hardware logic or circuitry integrated with or separate from other components of the base station 120. The scheduling information 268 can be used to setup a downlink transmission to a UE 110 or provided to another UE 110 to assist with interference cancelation.

Generally, the coordinator 266 enables the base station 120 to coordinate with other base stations 120 to form UE-coordination sets for interference cancelation. For example, the base station 120 may pair, select, or group UEs that are configured to use same time and frequency resources (*e*.*g*., candidates for interference cancelation). Alternately or additionally, the base station 120 or coordinator 266 may select UEs 110 that are close to each and/or near a respective edge of cell coverage provided by the base stations 120. In some cases, the coordinator 266 accounts for or considers mutual interference between the base stations 120 when determining which UEs 110 of the respective cells to group for the UE-coordination set.

The coordinator 266 of the base station 120 may also enable or configure a local wireless network connection between the UEs 110 of the UE-coordination set, such as to facilitate sharing of signal-based information or scheduling information 268 of a downlink transmission. For example, the coordinator 266 may allocate resources of a local wireless network connection that is available to both UEs 110 of the UE-coordination set and then provide an indication of the allocated resources to at least one of the UEs 110. By so doing, the UEs can establish the local wireless network connection for sharing information (*e*.*g*., I/Q samples) to enable interference cancelation.

CRM 262 also includes a base station manager 270. Alternately or additionally, the base station manager 270 may be implemented in whole or part as hardware logic or circuitry integrated with or separate from other components of the base stations 120. In at least some aspects, the base station manager 270 configures the LTE transceivers 256 and the 5G NR transceivers 258 for communication with the UE 110, as well as communication with a core network. The base stations 120 include an inter-base station interface 272, such as an Xn and/or X2 interface, which the base station manager 270 configures to exchange user-plane and control-plane data between another base station 120, to manage the communication of the base stations 120 with the UE 110. The base stations 120 include a core network interface 274 that the base station manager 270 configures to exchange user-plane and control-plane data with core network functions and/or entities.

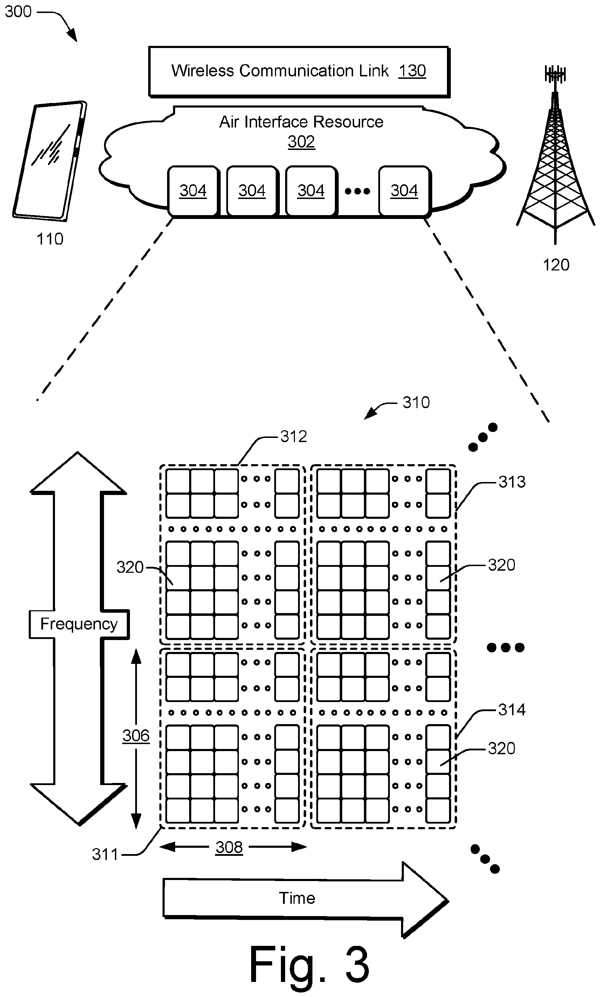

FIG. 3 illustrates an air interface resource that extends between a user equipment and a base station and with which various aspects of a UE-coordination set for a wireless network using an unlicensed frequency band can be implemented. In aspects, base stations 120 may determine that UEs 110 have respective air interface resources that intersect such that co-channel interference may occur. As such, the base stations 120 may form a UE-coordination set to enable one of the UEs to cancel potential interference caused by another base station or another UE of the UE-coordination set. The air interface resource 302 can be divided into resource units 304, each of which occupies some intersection of frequency spectrum and elapsed time. A portion of the air interface resource 302 is illustrated graphically in a grid or matrix having multiple resource blocks 310, including example resource blocks 311, 312, 313, 314. An example of a resource unit 304 therefore includes at least one resource block 310. As shown, time is depicted along the horizontal dimension as the abscissa axis, and frequency is depicted along the vertical dimension as the ordinate axis. The air interface resource 302, as defined by a given communication protocol or standard, may span any suitable specified frequency range, and/or may be divided into intervals of any specified duration. Increments of time can correspond to, for example, milliseconds (mSec). Increments of frequency can correspond to, for example, megahertz (MHz).

In example operations generally, the base stations 120 allocate portions (*e*.*g*., resource units 304) of the air interface resource 302 for uplink and downlink communications. Each resource block 310 of network access resources may be allocated to support respective wireless communication links 130 of multiple user equipment 110. In the lower left corner of the grid, the resource block 311 may span, as defined by a given communication protocol, a specified frequency range 306 and comprise multiple subcarriers or frequency sub-bands. The resource block 311 may include any suitable number of subcarriers (*e*.*g*., 12) that each correspond to a respective portion (*e.g.*, 15 kHz) of the specified frequency range 306 (*e*.*g*., 180 kHz). The resource block 311 may also span, as defined by the given communication protocol, a specified time interval 308 or time slot (*e*.*g*., lasting approximately one-half millisecond or 7 orthogonal frequency-division multiplexing (OFDM) symbols). The time interval 308 includes subintervals that may each correspond to a symbol, such as an OFDM symbol. As shown in FIG. 3, each resource block 310 may include multiple resource elements 320 (REs) that correspond to, or are defined by, a subcarrier of the frequency range 306 and a subinterval (or symbol) of the time interval 308. Alternatively, a given resource element 320 may span more than one frequency subcarrier or symbol. Thus, a resource unit 304 may include at least one resource block 310, at least one resource element 320, and so forth.

In example implementations, multiple user equipment 110 (one of which is shown) are communicating with the base stations 120 (one of which is shown) through access provided by portions of the air interface resource 302. The base station manager 270 (shown in FIG. 2) may determine a respective data-rate, type of information, or amount of information (*e*.*g*., data or control information) to be communicated (*e*.*g*., transmitted) by the user equipment 110. For example, the base station manager 270 can determine that each user equipment 110 is to transmit at a different respective data rate or transmit a different respective amount of information. The base station manager 270 then allocates one or more resource blocks 310 to each user equipment 110 based on the determined data rate or amount of information.

Additionally, or in the alternative to block-level resource grants, the base station manager 270 may allocate resource units at an element-level. Thus, the base station manager 270 may allocate one or more resource elements 320 or individual subcarriers to different user equipment 110. By so doing, one resource block 310 can be allocated to facilitate network access for multiple user equipment 110. Accordingly, the base station manager 270 may allocate, at various granularities, one or up to all subcarriers or resource elements 320 of a resource block 310 to one user equipment 110 or divided across multiple user equipment 110, thereby enabling higher network utilization or increased spectrum efficiency.

The base station manager 270 can therefore allocate air interface resource 302 by resource unit 304, resource block 310, frequency carrier, time interval, resource element 320, frequency subcarrier, time subinterval, symbol, spreading code, some combination thereof, and so forth. Based on respective allocations of resource units 304, the base station manager 270 can transmit respective messages to the multiple user equipment 110 indicating the respective allocation of resource units 304 to each user equipment 110. Each message may enable a respective user equipment 110 to queue the information or configure the LTE transceiver 206, and/or the 5G NR transceiver 208, to communicate via the allocated resource units 304 of the air interface resource 302.

### User Equipment-Coordination Set

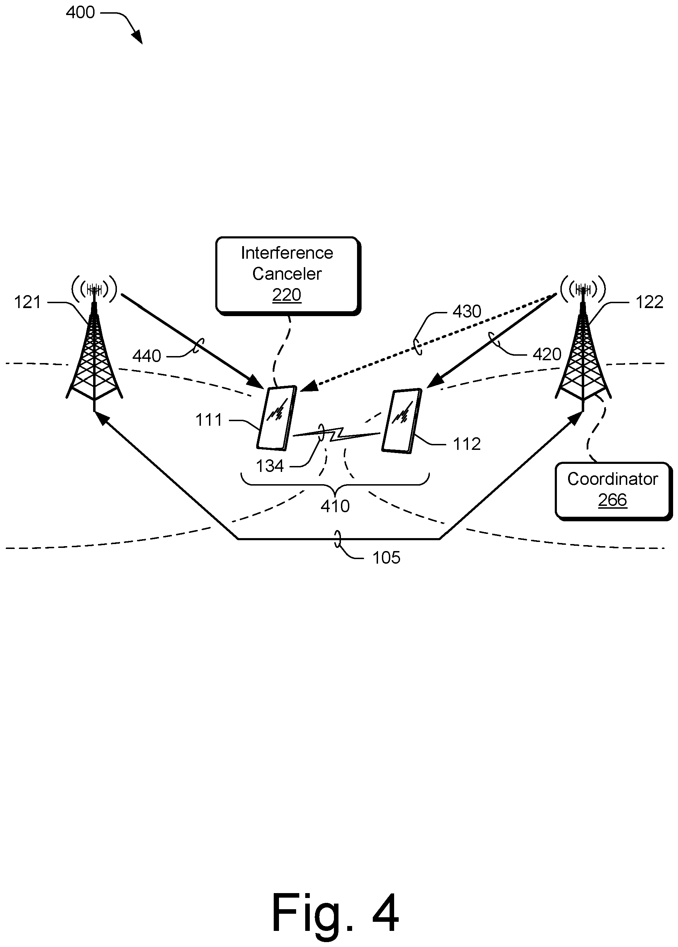

FIG. 4 illustrates an example environment at 400 in which a user equipment-coordination set 410 is implemented in accordance with one or more aspects. In this example, connection with a radio access network is provided by base stations 121 and 122, each of which manages respective UEs. In this example, assume that base station 121 manages UE 111 and base station 122 manages UE 112 of the user equipment-coordination set 410. By way of review, co-channel interference can occur when the base station 121 and the UE 111 use a first set of time and frequency air interface resources for a first downlink at the same time the base station 122 and the UE 112 use at least a subset or portion of the first set of time and frequency air interface resources for a second downlink. Depending on the air interface resource allocations (time and frequency) of downlinks to each UE, co-channel interference may affect UE 111 at certain times and affect UE 112 at other times. Co-channel interference may also be more likely to occur when UEs 110 of neighboring or adjacent base stations (or network areas) are proximate to each other as shown in FIG. 4.

In aspects of user equipment coordination for co-channel interference mitigation, a coordinator 266 of the base stations 120 can group UEs 110 into a UE-coordination set 410 to address co-channel interference. For example, the coordinator 266 can determine that two of the UEs 110 have scheduled air interface resources that intersect (collide) such that co-channel interference may occur. The coordinator 266 may also account for mutual interference between the base stations 121 and 122 when determining which UEs 110 to group for the UE-coordination set 410. Alternately or additionally, a coordinator 266 of the base stations 120 may analyze a respective signal strength, transmit power, mobility state, power capability, or geographic location of the UEs 110 when determining which UEs to group for the UE-coordination set 410.

The base stations 121 and 122, can group UEs into UECSs for interference mitigation either statically or dynamically. For static grouping, the base stations 121 and 122 determine groups of UEs 110 in advance, based on UE locations, but directing the UEs to coordinate occurs once the base stations 121 and 122 determine that there are scheduled, colliding air interface resources within one of the predetermined groups. For dynamic grouping, the base stations 121 and 122 form a UECS after colliding resource scheduling between two base stations is detected. Dynamic grouping may additionally consider the geographic locations of the UEs with colliding resource schedules.

In an alternative aspect, the base station 121 may have formed a first UECS that includes multiple UEs that are served by the base station 121 and the base station 122 may have formed a second UECS that includes multiple UEs that are served by the base station 122. The first UECS and the second UECS operate independently with their respective serving base stations when there is no need to coordinate to mitigate co-channel interference. If the base station 121 and the base station 122 determine that there are colliding air interface schedules between some of the UEs in the first UECS and the second UECS, the base stations 121 and 122 can direct those UEs in the first UECS and the second UECS to coordinate to mitigate co-channel interference.

As part of the UE-coordination set 410, the coordinator 266 or base stations 120 may allocate resources of a local wireless network connection 134 that is available to the UE 111 and the UE 112. In some cases, this enables the UEs 110 to share signal-related information and/or scheduling information associated with downlinks to the UEs 110 from their respective base stations 120. Based on this information, an interference canceler 220 of the UE 111 can use joint reception to model, reconstruct, or estimate interference from the downlink from the base station 122 to a reception of a downlink transmission from the base station 121 to the UE 111. Using the modeled interference, the interference canceler 220 can cancel or reduce interference to downlink reception by the UE 111. Likewise, joint reception can be used to model, reconstruct, or estimate interference from the downlink from the base station 121 to a reception of a downlink transmission from the base station 122 to the UE 112. By so doing, receiver performance of the interference-canceling UE can be improved for downlink reception, and interference-limiting of network capacity is reduced.

With reference to FIG. 4, an example of this is illustrated by UEs 111 and 112 which are configured as a UE-coordination set 410 by the base stations 120. Here, assume that UE 112 transmits, over local wireless network connection 134, I/Q samples of a downlink transmission 420 from the base station 122. The UE 111 may also receive additional information (*e*.*g*., a Modulation and Coding Scheme, timing information, or the like) for the downlink 420 from the UE 112 through the local wireless network connection 134 or from the base station 121 through another downlink (*e*.*g*., relayed from base station 122 via a base station interface, such as an Xn interface).

To cancel the interference 430 to the downlink 440, the interference canceler 220 models, based on the I/Q samples, the interference caused by or associated with the downlink 420 to the UE 112. The interference canceler 220 then subtracts the modeled interference from the received signals to cancel at least a portion of the interference 430 to the downlink 440 received from the base station 121. In some cases, the interference canceler 220 reduces or cancels the interference at an I/Q signal level based on the modeled interference. After the interference is removed from the received downlink signals, the downlink signals can be demodulated and decoded for data or other control information of the downlink from the base station 121.

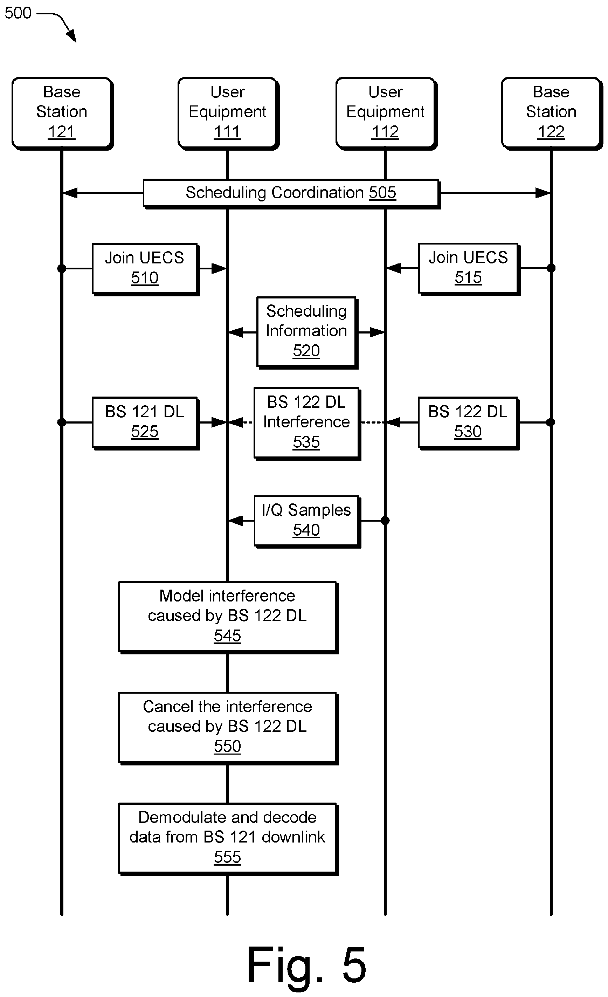

FIG. 5 illustrates an example of transactions among various network entities in accordance with aspects of user equipment coordination for co-channel interference mitigation. The base stations 121 and 122 and the UEs 111 and 112 may be implemented similar to the entities described with reference to FIGS. 1-4. Generally, the transactions of FIG. 5 are described in the context of the environment of FIG. 4 in which a first UE 111 and a second UE 112 may experience co-channel interference to downlink communications from respective base stations 121 and 122. As such, the base station 121 and base station 122 may form a UE-coordination set 410 that enables the UE 111 and the UE 112 to reduce or cancel the interference that occurs during reception of a downlink transmissions from the base stations 121 and 122.

At 505, the base station 121 and base station 122 perform scheduling coordination, such as to determine which UEs of their respective cells, UE-coordination sets, or coverage areas to group for user equipment coordination. The base stations 121 and 122 may pair, select, or group UEs that are configured to use overlapping time and frequency resources when the interference cancelation is enabled between the UEs. For example, the base station 121 and the base station 122 may determine that the UE 111 and the UE 112 are scheduled to use colliding air interface resources. As a result of the determination, the base station 121 and the base station 122 direct the UE 111 and the UE 112 to form a UECS in order to coordinate to reduce co-channel interference.

In some cases, the base station 121 and 122 account for or consider mutual interference between the base stations when determining which UEs to group for the UE-coordination set. The base stations 120 may also analyze a respective signal strength, transmit power, mobility state, power capability, or geographic location of UEs when determining which UEs to group for the UE-coordination set.

At 510, the base station 121 transmits a control channel message to the UE 111 that instructs the UE 111 to coordinate with the UE 112. The control channel message may include the identity of the UE(s) in the UECS (*e*.*g*., the identity of the UE 112) and/or a data channel grant including related information, such as an MCS, channel information, timing information, or frequency information. At 515, the base station 122 transmits a control channel message to the UE 112 that instructs the UE 112 to coordinate with the UE 111. The control channel message may include the identity of the UE(s) in the UECS (*e*.*g*., the identity of the UE 111), a data channel grant including related information, such as an MCS, channel information, timing information, or frequency information. The base stations 121 and 122 can account for the time required for the UE 111 and the UE 112 to form the UECS (*e*.*g*., establish the local wireless connection 134) by transmitting the control channel messages sufficiently in advance of the use of the data channel grants for downlink communication.

In some aspects, the base stations 120 send layer-2 messages (*e*.*g*., Media Access Control layer) and/or layer-3 (*e*.*g*., Service Data Adaptation Protocol layer) messages to UEs 110 to direct or request those UEs to join the UE-coordination set 410. The base stations 120 can provide additional data to the UEs 110 within the UE-coordination set to enable the UEs to communicate directly with other UEs of the UE-coordination set. The additional data may include an identity of a coordinating UE for the UE-coordination set, security information, and/or local wireless network information.

In one aspect, the base station 121 and the base station 122 can adapt the scheduling of the UE 111 and the UE 112 to increase the amount of colliding air interface resources used in the downlinks to the UE 111 and the UE 112. By exploiting the joint reception capabilities of the UECS to differentiate between desired and undesired signals after demodulation, increasing the amount of colliding air interface resources enables the base stations 121 and 122 to increase overall spectral efficiency.

Optionally or additionally at 520, the UEs in the UECS can share grant scheduling information for each UE through a local wireless network connection. For example, the UEs can share scheduling information such as bandwidth parts, resource block allocation, slot/OFDM symbol allocation, MIMO layers, and the like, to support the UECS differentiating downlink communications on a per-UE basis.

At 525, the UE 111 receives a first downlink transmission from the base station 121 during transmission of the second downlink transmission from the base station 122. At 530, the UE 112 receives the second downlink transmission from the base station 122 during transmission of the first downlink transmission from the base station 121. At 535, the UE 111 also receives the second downlink transmission from the base station 121 as co-channel interference to the first downlink transmission from the base station 121.

At 540, after demodulating the second downlink transmission from the base station 122, the UE 112 transmits, through the local wireless network connection, I/Q samples of the demodulated downlink signals to the UE 111.

At 545, the UE 111 models, based on the I/Q samples, interference caused by the second downlink transmission from the base station 122 at 530. For example, the UE 111 may model the interference based on additional signaling information, such as timing information, frequency information, or MCS information received from the UE 112 or through the base station 121 (*e*.*g*., provided by the base station 122) at 510.

At 550, based on the modeled interference, the UE 111 cancels the interference to the received first downlink transmission caused by the second downlink transmission of the base station 122. In some cases, the UE 111 reduces or cancels the interference at an I/Q signal level based on the modeled interference. For example, the UE 111 may subtract the modeled or estimated interference from demodulated receive signals of the downlink that are affected by the co-channel interference. Alternately or additionally, the UE 111 may apply a filter generated using the I/Q data for the second downlink to the signals of the received first downlink transmission to cancel the interference.

At 555, the UE 111 demodulates the received downlink signals from which the interference is canceled. By canceling or reducing the interference caused by the co-channel interference, receive performance of the UE 111 can be improved. At 555, the UE 111 decodes, from the demodulated downlink, data or control information transmitted by the base station 121 to the UE 111. In some cases, mitigating the co-channel interference from the downlink is effective to improve decoding performance of the UE 111 or reduces a number of retransmissions needed to enable successful data decoding operations.

In one alternative (not illustrated in FIG. 5), the UE 111 can use the I/Q samples received at 540 to demodulate the second downlink in a manner similar to the process illustrated in 545, 550, and 555 by modeling and mitigating the co-channel interference from the first downlink to the second downlink. In another alternative (not illustrated in FIG. 5), after demodulating the first downlink transmission from the base station 121, the UE 111 transmits, through the local wireless network connection, I/Q samples of the demodulated downlink signals to the UE 112. The UE 112 uses the received I/Q samples from the UE 111 to demodulate the second downlink in a manner similar to the process illustrated in 545, 550, and 555 by modeling and mitigating the co-channel interference from the first downlink to the second downlink. The decision of where to perform interference mitigation and demodulation may vary in each UECS based on the capabilities of the UEs in each UECS, latency demands of the applications executing on the UEs, or the like.

### Example Methods

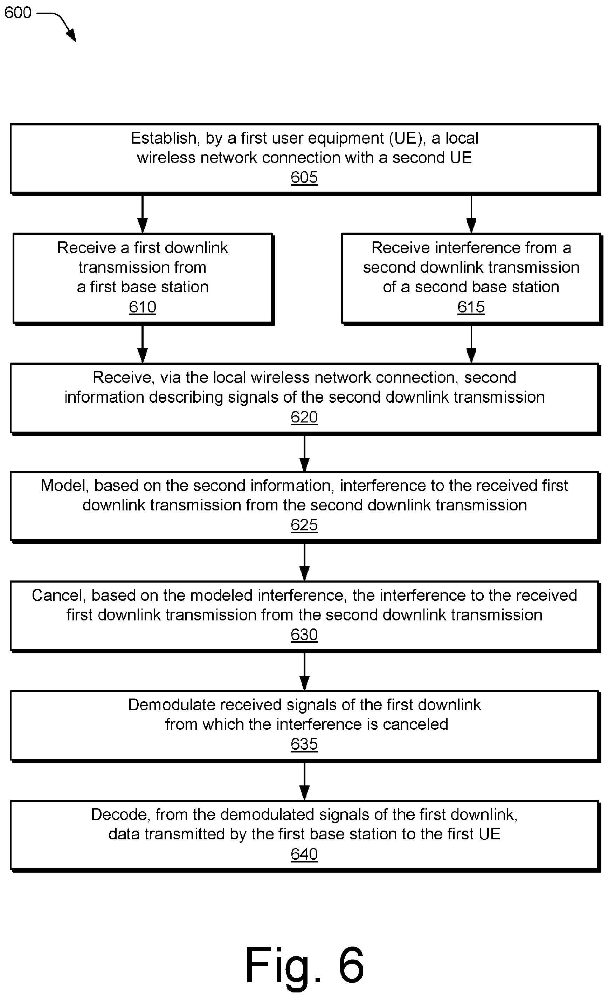

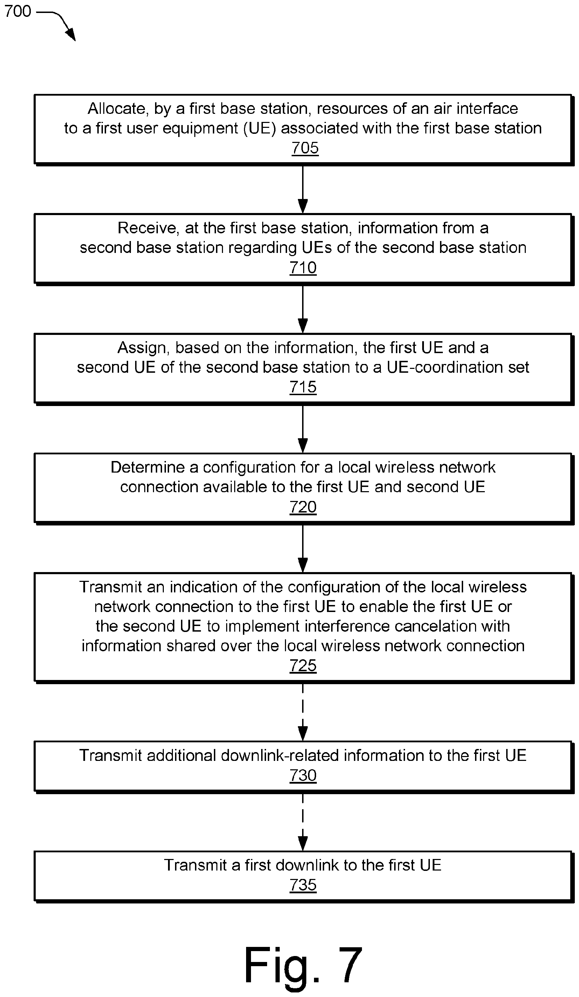

Example methods 600 and 700 are described with reference to FIGS. 6 and 7 in accordance with one or more aspects of user equipment coordination for co-channel interference mitigation. The order in which the method blocks are described are not intended to be construed as a limitation, and any number of the described method blocks can be skipped or combined in any order to implement a method or an alternate method. Generally, any of the components, modules, methods, and operations described herein can be implemented using software, firmware, hardware (*e*.*g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or additionally, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 6 illustrates an example method for canceling interference from a received downlink transmission. In some aspects, operations of the method 600 are implemented by an interference canceler 220 of a UE 110. Alternately or additionally, the operations of the method 600 can be implemented by other entities described herein, such as by UEs 110 of a UE-coordination set 410.

At 605, a first UE (*e*.*g*., the UE 111) establishes a local wireless network connection (*e*.*g*., the local wireless connection 134) with a second UE (*e.g.*, the UE 112). The first UE is managed by a first base station (*e*.*g*., the base station 121) of a wireless network, and the second UE is managed by a second base station (*e*.*g*., the base station 122) of the wireless network. The local wireless network connection established between the first UE and the second UE may include a millimeter wave link, a sub-millimeter wave link, a free space optical link, or a wireless local access network link. The local wireless network connection between the first UE and the second UE can be implemented in a licensed frequency band or an unlicensed frequency band. In some cases, the first UE receives, from the first base station, information useful to configure the local wireless network connection with the second UE. In other cases, the first UE may determine or generate the information useful to configure the local wireless network connection. This information may include or indicate a type of the local wireless network connection, the frequency band of the local wireless network connection, frequency resources of the local wireless network connection, or time resources of the local wireless network connection.

At 610, the first UE receives a first downlink transmission from the first base station. For example, the UE 111 receives a data channel downlink transmission from the base station 121. At 615, the first UE may also receive interference caused by the second downlink transmission of the second base station to the second UE.

At 620, the first UE receives second information describing signals of the second downlink transmission from the second base station to the second UE. The second information includes I/Q samples, quadrature signals, or other information associated with the second downlink transmission. Alternately or additionally, the second information may include time resources, frequency resources, and/or a modulation coding scheme (MCS) of the second downlink transmission.

At 625, the first UE models, based on the second information, interference to the received first downlink transmission from the second downlink transmission of the second base station. This interference may be caused by or associated with the scheduled downlink transmission of the second base station. For example, the first UE may model, reconstruct, or estimate the interference cause by the second downlink based on I/Q samples received from the second UE. In some cases, the first UE generates, using the I/Q samples, a filter for canceling the interference from a reception of a downlink transmission. Alternately or additionally, the first UE can model the interference based on additional signaling information, such as timing information, frequency information, or MCS information received from the second UE or relayed through the first base station (e.g., provided by the second base station). In some cases, the first UE uses a non-Gaussian interference estimation calculation to model the interference based on the second information.

At 630, the first UE cancels, based on the modeled interference, the interference to the received first downlink transmission from the second downlink transmission. In some cases, the first UE reduces or cancels the interference at an I/Q signal level based on the modeled interference. For example, the first UE may subtract the modeled or estimated interference from demodulated receive signals of the first downlink that are affected by the co-channel interference. Alternately or additionally, the first UE may apply the generated filter to the received signals of the first downlink transmission to cancel the interference.

At 635, the first UE demodulates the received first downlink from which at least a portion of the interference is canceled or reduced. Alternately or additionally, the received first downlink may be demodulated before or during interference cancelation operations. By canceling or reducing at least a portion of the interference caused by the second downlink transmission, receive performance of the first UE can be improved. At 640, the first UE decodes, from the demodulated downlink, data or control information transmitted by the first base station to the first UE.

FIG. 7 illustrates an example method for forming a user equipment-coordination set in accordance with one or more aspects. In some implementations, operations of the method 700 are performed by a coordinator 266 of a base station 120. Alternately or additionally, the operations of the method 700 can be implemented by other entities described herein, such as the base stations 120.

At 705, a first base station allocates resources of an air interface to a first UE of a first cell managed by the first base station. The first base station may allocate the resources or configure the first base station as part of managing the first base station or in association with handover operations when the first base station enters a network cell managed by the first base station. In some cases, the first base station collects or determines information regarding multiple UEs associated with or being managed by the first base station, such as UEs that are connected to, or registered with, the first base station. This information may include a respective signal strength, transmit power, mobility state, power capability, local wireless network connection capability, UE-coordination set capability (e.g., interference cancelation capabilities), or location of UEs in a cell of the first base station.

At 710, the first base station receives information from a second base station regarding UEs of a second cell managed by the second base station, such as UEs that are connected to, or registered with, the second base station. The first base station and second base station may communicate over an Xn interface, such as an Xn interface implemented through a wireline link. The information provided by the second base station may include a respective signal strength, transmit power, mobility state, power capability, local wireless network connection capability, UE-coordination set capability, or location of the UEs of the second cell.

At 715, the first base station assigns, based on the information, the first UE of the first cell and a second UE of the second cell to a UE-coordination set. This operation may be performed in coordination with the second base station. For example, the first base station or base stations may pair, select, or group UEs that are configured to use same time and frequency resources. Alternately or additionally, the base stations may select UEs that are close to each and/or near a respective edge of cell coverage provided by the base stations. In some cases, the base stations account for or consider mutual interference between the base stations when determining which UEs of the respective cells to pair up for the UE-coordination set. Alternately or additionally, one of base stations may analyze a respective signal strength, transmit power, mobility state, power capability, or location of UEs when determining which UEs to pair for the UE-coordination set. In some aspects, the first base station transmits a message or indication to the first UE to assign the first UE to the UE-coordination set. For example, the first base station can transmit a layer-2 message and/or layer-3 message to the first UE to direct or request that first UE to join the UE-coordination formed by the first base station.

At 720, the first base station allocates resources of a local wireless network connection available to the first UE and second UE. This allows the first UE and the second UE to share signal-related information or schedule-related information that may be used by one of the UEs for interference cancelation. Generally, the first UE and the second UE are configured to communicate directly over the local wireless network connection, though information may be provided or relayed through a respective base station to a UE. The local wireless network connection can include a millimeter wave link, a sub-millimeter wave link, a free space optical link, or a wireless local access network link.

At 725, the first base station transmits an indication of the allocated resources of the local wireless network connection to the first UE. In some cases, the first base station also transmits the indication to the second base station, which then relays the indication to the second UE. Thus, the first base station may use the second base station to relay the indication to the second UE that is not directly managed by the first base station. Providing the indication to the first UE and the second UE of the UE-coordination set enables the UEs to communicate or share information for implementing interference cancelation. The indication transmitted to the UEs may indicate a type of the local wireless network connection, frequency band of the local wireless network connection, frequency resources of the local wireless network connection, or time resources of the local wireless network connection.

Optionally at 730, the first base station transmits additional downlink-related information to the first UE. The additional information may include scheduling information for downlink transmission of the second base station to the second UE. Alternately, the second UE can transmit the scheduling information to the first UE, such as over the local wireless network connection between the UEs.

Optionally at 735, the first base station transmits a first downlink to the first UE through the air interface resources allocated to the first UE. For example, the first base station can transmit a first downlink of data to the first UE, which is capable or configured to perform interference cancelation.

## Claims

1. A method performed by a first user equipment to cancel co-channel interference in coordination with a second user equipment, the method comprising the first user equipment:
receiving (610) a first downlink transmission from a first base station;
receiving (620), from the second user equipment, first information regarding a second downlink transmission from a second base station to the second user equipment, the first information including I/Q samples of the second downlink transmission as demodulated;
receiving second information from the first base station regarding scheduling of the second downlink transmission, the second information indicating Multiple Input Multiple Output modes and modulation modes at different points in time;
based on the received first information and second information, modeling (625) interference from the second downlink transmission to the reception of the first downlink transmission at the first user equipment; and
based on the modeling of the interference, canceling (630) the co-channel interference to the received first downlink transmission from the second downlink transmission.

2. The method of claim 1, wherein:
the modeling of the interference comprises generating, by the first user equipment and using the I/Q samples, a filter to cancel the co-channel interference; and
the canceling the co-channel interference comprises applying, by the first user equipment, the generated filter to signals of the received first downlink transmission.

3. The method of any one of the preceding claims, wherein the canceling the interference includes subtracting, by the first user equipment, the modeled interference from signals of the received first downlink transmission.

4. The method of claim 1, wherein the modeling the interference comprises using a non-Gaussian interference estimation calculation based on the information received regarding the second downlink transmission.

5. The method of any one of the preceding claims, wherein the first user equipment receives the information from the second user equipment over a local wireless connection.

6. The method of any one of the preceding claims, wherein the information regarding the second downlink transmission from the second base station to the second user equipment includes information indicating frequency and time scheduling information for air interface resources allocated for the second downlink transmission.

7. A first user equipment (110) comprising:
a wireless transceiver (206, 208);
a local wireless transceiver (210);
a processor (214); and
instructions for an interference canceler application that when executed by the processor (214) cause the first user equipment to perform the steps of the method according to any one of the preceding claims.

8. A method performed by a first base station to establish a user equipment-coordination set through which user equipment-based interference cancelation is enabled, the method comprising the first base station:
determining first information regarding user equipments connected to the first base station;
receiving (710), from a second base station and using an inter-base station interface of the first base station, second information regarding user equipments connected to the second base station;
assigning (715), based on the first information and the second information, a first user equipment of the first base station and a second user equipment of the second base station to a user equipment-coordination set;
transmitting, to the first user equipment of the first base station, an indication of the assignment effective to cause the first user equipment to join the user equipment-coordination set; and
transmitting (730), to the first user equipment of the first base station, third information regarding scheduling of a second downlink transmission of the second base station to the second user equipment, the third information indicating Multiple Input Multiple Output modes and modulation modes at different points in time;
transmitting (735), to the first user equipment, a downlink signal from which the first user equipment cancels interference using the interference cancelation that is enabled through the user equipment-coordination set;
the method further comprising the first base station transmitting (725), to the first user equipment, an indication of configuration information for a local wireless connection that is useable by the first user equipment to establish the local wireless connection between the first user equipment and the second user equipment of the user equipment-coordination set, the local wireless connection enabling the first user equipment and the second user equipment to share signal-related information for interference cancelation;
wherein the signal-related information shared through the local wireless connection includes I/Q samples for a second downlink transmission from the second base station to the second user equipment.

9. The method of claim 8, wherein the first information or second information indicates radio communication information.

10. The method of claim 9, wherein the radio communication information includes one or more of:
a signal strength;
a transmit power;
a mobility state; or
a power capability.

11. The method of any one of claims 8 to 10, wherein the first information or second information indicates UECS information.

12. The method of claim 11, wherein the UECS information includes one or more of:
a local wireless connection capability;
a user equipment-coordination set capability; or
a location of the respective user equipment.

13. The method of any one of claims 8 to 12, wherein the transmitting, to the first user equipment of the first base station, an indication of the assignment effective to cause the first user equipment to join the user equipment-coordination set comprises:
transmitting layer-2 messages or layer-3 messages to the first user equipment to direct the first user equipment to join the user equipment-coordination set.

14. A base station (120) comprising:
a wireless transceiver (256, 258);
processor (260); and
memory (262) comprising instructions for a user equipment set coordinator application that, when executed by the processor (260), cause the base station to perform the steps of the method according to any one of claims 8 to 13.

## Patentansprüche

1. Verfahren, das durch ein erstes Benutzergerät durchgeführt wird, um Ko-Kanalinterferenzen in Koordination mit einem zweiten Benutzergerät zu unterdrücken, wobei das Verfahren Folgendes durch das erste Benutzergerät umfasst:
Empfangen (610) einer ersten Downlink-Übertragung von einer ersten Basisstation;
Empfangen (620) erster Informationen bezüglich einer zweiten Downlink-Übertragung von einer zweiten Basisstation an das zweite Benutzergerät von dem zweiten Benutzergerät, wobei die ersten Informationen I/Q-Abtastungen der zweiten Downlink-Übertragung als demoduliert beinhalten;
Empfangen zweiter Informationen von der ersten Basisstation bezüglich der Planung der zweiten Downlink-Übertragung, wobei die zweiten Informationen Mehrfacheingabe-Mehrfachausgabe-Modi und Modulationsmodi zu unterschiedlichen Zeitpunkten angeben;
basierend auf den empfangenen ersten Informationen und zweiten Informationen, Modellieren (625) der Interferenz von der zweiten Downlink-Übertragung zum Empfang der ersten Downlink-Übertragung an dem ersten Benutzergerät; und
basierend auf dem Modellieren der Interferenz, Unterdrücken (630) der Ko-Kanalinterferenz auf die empfangene erste Downlink-Übertragung von der zweiten Downlink-Übertragung.

2. Verfahren nach Anspruch 1, wobei:
das Modellieren der Interferenz Erzeugen eines Filters zum Unterdrücken der Ko-Kanalinterferenz durch das erste Benutzergerät unter Verwendung der 1/Q-Abtastungen umfasst; und
das Unterdrücken der Ko-Kanalinterferenz Anwenden des erzeugten Filters auf Signale der empfangenen ersten Downlink-Übertragung durch das erste Benutzergerät umfasst.

3. Verfahren nach einem der vorhergehenden Ansprüche, wobei das Unterdrücken der Interferenz Subtrahieren der modellierten Interferenz von den Signalen der empfangenen ersten Downlink-Übertragung durch das erste Benutzergerät beinhaltet.

4. Verfahren nach Anspruch 1, wobei das Modellieren der Interferenz Verwenden einer nicht-Gauß'schen Interferenz-Abschätzungsberechnung basierend auf den Informationen, die bezüglich der zweiten Downlink-Übertragung empfangen wurden, umfasst.

5. Verfahren nach einem der vorhergehenden Ansprüche, wobei das erste Benutzergerät die Informationen von dem zweiten Benutzergerät über eine lokale drahtlose Verbindung empfängt.

6. Verfahren nach einem der vorhergehenden Ansprüche, wobei die Informationen bezüglich der zweiten Downlink-Übertragung von der zweiten Basisstation auf das zweite Benutzergerät Informationen beinhalten, die Frequenz- und Zeitplanungsinformationen für Luftschnittstellenressourcen beinhalten, die für die zweite Downlink-Übertragung zugewiesen sind.

7. Erstes Benutzergerät (110), umfassend:
einen drahtlosen Sender-Empfänger (206, 208);
einen lokalen drahtlosen Sender-Empfänger (210);
einen Prozessor (214); und
Anweisungen für eine Interferenzunterdrückungsanwendung, die, wenn sie von dem Prozessor (214) ausgeführt werden, das erste Benutzergerät veranlassen, die Schritte des Verfahrens nach einem der vorhergehenden Ansprüche durchzuführen.

8. Verfahren, das von einer ersten Basisstation durchgeführt wird, um einen Benutzergeräte-Koordinationssatz herzustellen, durch den eine Benutzergeräte-basierte Interferenzunterdrückung ermöglicht wird, wobei das Verfahren Folgendes durch die erste Basisstation umfasst:
Bestimmen erster Informationen bezüglich der Benutzergeräte, die mit der ersten Basisstation verbunden sind;
Empfangen (710) zweiter Informationen bezüglich der Benutzergeräte, die mit der zweiten Basisstation verbunden sind, von einer zweiten Basisstation und unter Verwendung einer Inter-Basisstationsschnittstelle der ersten Basisstation;
Zuweisen (715) eines ersten Benutzergeräts der ersten Basisstation und eines zweiten Benutzergeräts der zweiten Basisstation zu einem Benutzergeräte-Koordinationssatz, basierend auf den ersten Informationen und den zweiten Informationen;
Übertragen einer Angabe der Zuweisung, die bewirkt, dass das erste Benutzergerät zum Verbinden mit dem Benutzergeräte-Koordinationssatz veranlasst wird, an das erste Benutzergerät der ersten Basisstation; und
Übertragen (730) dritter Informationen bezüglich der Planung einer zweiten Downlink-Übertragung von der zweiten Basisstation an das zweite Benutzergerät an das erste Benutzergerät, wobei die dritten Informationen Mehrfacheingabe-Mehrfachausgabe-Modi und Modulationsmodi zu unterschiedlichen Zeitpunkten angeben;
Übertragen (735) eines Downlink-Signals an das erste Benutzergerät, von dem das erste Benutzergerät die Interferenz unter Verwendung der Interferenzunterdrückung, die durch den Benutzergeräte-Koordinationssatz ermöglicht wird, unterdrückt;
wobei das Verfahren ferner Folgendes durch die erste Basisstation umfasst: Übertragen (725) einer Angabe von Konfigurationsinformationen für eine lokale drahtlose Verbindung, die durch das erste Benutzergerät verwendet werden kann, um die lokale drahtlose Verbindung zwischen dem ersten Benutzergerät und dem zweiten Benutzergerät des Benutzergeräte-Koordinationssatzes herzustellen, an das erste Benutzergerät überträgt, wobei die lokale drahtlose Verbindung es dem ersten Benutzergerät und dem zweiten Benutzergerät ermöglicht, signalbezogene Informationen zur Interferenzunterdrückung zu teilen;
wobei die signalbezogenen Informationen, die über die lokale drahtlose Verbindung geteilt werden, 1/Q-Abtastungen für eine zweite Downlink-Übertragung von der zweiten Basisstation an das zweite Benutzergerät beinhalten.

9. Verfahren nach Anspruch 8, wobei die ersten Informationen oder die zweiten Informationen Funkkommunikationsinformationen angeben.

10. Verfahren nach Anspruch 9, wobei die Funkkommunikationsinformationen eines oder mehrere von Folgendem beinhalten:
eine Signalstärke;
eine Sendeleistung;
einen Mobilitätszustand; oder
einer Leistungsfähigkeit.

11. Verfahren nach einem der Ansprüche 8 bis 10, wobei die ersten Informationen oder die zweiten Informationen die UECS-Informationen (user equipment-coordination set, UECS) angeben.

12. Verfahren nach Anspruch 11, wobei die UECS-Informationen eines oder mehrere von Folgendem beinhalten:
eine lokale drahtlose Verbindungsfähigkeit;
eine Benutzergeräte-Koordinationssatz-Fähigkeit; oder
einen Standort des jeweiligen Benutzergeräts.

13. Verfahren nach einem der Ansprüche 8 bis 12, wobei das Übertragen einer Angabe der Zuweisung, die bewirkt, dass das erste Benutzergerät zum Verbinden mit dem Benutzergeräte-Koordinationssatz veranlasst wird, an das erste Benutzergerät der ersten Basisstation, umfasst:
Übertragen von Schicht-2-Nachrichten oder Schicht-3-Nachrichten an das erste Benutzergerät, um das erste Benutzergerät zum Verbinden mit dem Benutzergeräte-Koordinationssatz anzuweisen.

14. Basisstation (120), umfassend:
einen drahtlosen Sender-Empfänger (256, 258);
einen Prozessor (260); und
Speicher (262), umfassend Anweisungen für eine Benutzergerätesatz-Koordinatoranwendung, die, wenn sie von dem Prozessor (260) ausgeführt werden, die Basisstation veranlassen, die Schritte des Verfahrens nach einem der Ansprüche 8 bis 13 durchzuführen.

## Revendications

1. Procédé réalisé par un premier équipement utilisateur pour annuler le brouillage dans le même canal en coordination avec un second équipement utilisateur, le procédé comprenant le premier équipement utilisateur :
la réception (610) d'une première transmission de liaison descendante à partir d'une première station de base ;
la réception (620), à partir du second équipement utilisateur, des premières informations concernant une seconde transmission de liaison descendante à partir d'une seconde station de base vers le second équipement utilisateur, les premières informations comportant des échantillons I/Q de la seconde transmission de liaison descendante telle que démodulée ;
la réception des deuxièmes informations à partir de la première station de base concernant la planification de la seconde transmission de liaison descendante, les deuxièmes informations indiquant des modes d'entrées multiples, de sorties multiples et des modes de modulation à différents moments ;
sur la base des premières informations reçues et des deuxièmes informations, la modélisation (625) de brouillage à partir de la seconde transmission de liaison descendante à la réception de la première transmission de liaison descendante au niveau du premier équipement utilisateur ; et
sur la base de la modélisation de brouillage, l'annulation (630) de brouillage du même canal à la première transmission de liaison descendante reçue à partir de la seconde transmission de liaison descendante.

2. Procédé selon la revendication 1, dans lequel :
la modélisation de brouillage comprend la génération, par le premier équipement utilisateur et à l'aide des échantillons I/Q, d'un filtre pour annuler le brouillage du même canal ; et
l'annulation de brouillage du même canal comprend l'application, par le premier équipement utilisateur, du filtre généré aux signaux de la première transmission de liaison descendante reçue.

3. Procédé selon l'une quelconque des revendications précédentes, dans lequel l'annulation de brouillage comporte la soustraction, par le premier équipement utilisateur, de brouillage modélisé à partir des signaux de la première transmission de liaison descendante reçue.

4. Procédé selon la revendication 1, dans lequel la modélisation de brouillage comprend l'utilisation d'un calcul d'estimation de brouillage non gaussienne sur la base des informations reçues concernant la seconde transmission de liaison descendante.

5. Procédé selon l'une quelconque des revendications précédentes, dans lequel le premier équipement utilisateur reçoit les informations à partir du second équipement utilisateur par le biais d'une connexion sans fil locale.

6. Procédé selon l'une quelconque des revendications précédentes, dans lequel les informations concernant la seconde transmission de liaison descendante à partir de la seconde station de base au second équipement utilisateur comportent des informations indiquant des informations de planification de fréquence et de temps pour les ressources d'interface radio allouées pour la seconde transmission de liaison descendante.

7. Premier équipement utilisateur (110) comprenant :
un émetteur-récepteur sans fil (206, 208) ;
un émetteur-récepteur sans fil local (210) ;
un processeur (214) ; et
des instructions pour une application d'annulation de brouillage qui, lorsqu'elles sont exécutées par le processeur (214), amènent le premier équipement utilisateur à réaliser les étapes du procédé selon l'une quelconque des revendications précédentes.

8. Procédé réalisé par une première station de base pour établir un ensemble de coordination d'équipements utilisateurs par l'intermédiaire duquel l'annulation de brouillage basée sur l'équipement utilisateur est activée, le procédé comprenant la première station de base :
la détermination des premières informations concernant les équipements utilisateurs connectés à la première station de base ;
la réception (710), à partir d'une seconde station de base et à l'aide d'une interface inter-stations de base de la première station de base, des deuxièmes informations concernant des équipements utilisateurs connectés à la seconde station de base ;
l'affectation (715), sur la base des premières informations et des deuxièmes informations, d'un premier équipement utilisateur de la première station de base et d'un second équipement utilisateur de la seconde station de base à un ensemble de coordination d'équipements utilisateurs ;
la transmission, au premier équipement utilisateur de la première station de base, d'une indication de l'affectation effective pour amener le premier équipement utilisateur à rejoindre l'ensemble de coordination d'équipements utilisateurs ; et
la transmission (730), au premier équipement utilisateur de la première station de base, des troisièmes informations concernant la planification d'une seconde transmission de liaison descendante de la seconde station de base au second équipement utilisateur, les troisièmes informations indiquant des modes d'entrées multiples, de sorties multiples et des modes de modulation à différents moments ;
la transmission (735), au premier équipement utilisateur, d'un signal de liaison descendante à partir duquel le premier équipement utilisateur annule le brouillage à l'aide de l'annulation de brouillage qui est activée par le biais de l'ensemble de coordination d'équipements utilisateurs ;
le procédé comprenant également la première station de base transmettant (725), au premier équipement utilisateur, une indication d'informations de configuration pour une connexion sans fil locale qui est utilisable par le premier équipement utilisateur pour établir la connexion sans fil locale entre le premier équipement utilisateur et le second équipement utilisateur de l'ensemble de coordination d'équipements utilisateurs, la connexion sans fil locale permettant au premier équipement utilisateur et au second équipement utilisateur de partager des informations relatives au signal pour l'annulation de brouillage ;
dans lequel les informations relatives au signal partagées par le biais de la connexion sans fil locale comportent des échantillons I/Q pour une seconde transmission de liaison descendante de la seconde station de base au second équipement utilisateur.

9. Procédé selon la revendication 8, dans lequel les premières informations ou les deuxièmes informations indiquent des informations de communication radio.

10. Procédé selon la revendication 9, dans lequel les informations de communication radio comportent l'un ou plusieurs :
d'une force de signal ;
d'une puissance d'émission ;
d'un état de mobilité ; ou
d'une capacité de puissance.

11. Procédé selon l'une quelconque des revendications 8 à 10, dans lequel les premières informations ou les deuxièmes informations indiquent des informations UECS.

12. Procédé selon la revendication 11, dans lequel les informations UECS comportent l'un ou plusieurs :
d'une capacité de connexion sans fil locale ;
d'une capacité d'ensemble de coordination d'équipements utilisateurs ; ou
d'un emplacement de l'équipement utilisateur respectif.

13. Procédé selon l'une quelconque des revendications 8 à 12, dans lequel la transmission, au premier équipement utilisateur de la première station de base, d'une indication de l'affectation effective pour amener le premier équipement utilisateur à rejoindre l'ensemble de coordination d'équipements utilisateurs comprend :
la transmission des messages de couche 2 ou des messages de couche 3 au premier équipement utilisateur pour ordonner au premier équipement utilisateur de rejoindre l'ensemble de coordination d'équipements utilisateurs.

14. Station de base (120) comprenant :
un émetteur-récepteur sans fil (256, 258) ;
un processeur (260) ; et
une mémoire (262) comprenant des instructions pour une application de coordinateur d'ensemble d'équipements utilisateurs qui, lorsqu'elles sont exécutées par le processeur (260), amènent la station de base à réaliser les étapes du procédé selon l'une quelconque des revendications 8 à 13.
